# EUROPEAN PATENT APPLICATION

(11) **EP 2 387 009 A1**
(43) Date of publication of application: **16.11.2011**
(21) Application number: 11166048.6
(22) Date of filing: 13.05.2011
(51) Int. Cl.: G07F 17/32

(54) **Mobile device, method and system for providing game on idle screen**

(30) Priority: 14.05.2010 KR 20100045489
(71) Applicant: Samsung Electronics Co., Ltd., Gyeonggi-do 506-762 (KR)
(72) Inventor: Park, Se Hwan, Gyeonggi-do (KR)
(74) Representative: Jenkins, Richard Gavin

(57) **Abstract**

A mobile device and related system and method for providing a differentiated game service on an idle screen are provided. The method includes displaying the idle screen containing a plurality of icons, executing a slot machine game using the icons when a first touch and move gesture in a first direction is detected on the idle screen, and outputting execution results of the slot machine game. When a second touch and move gesture in a second direction is detected during the execution of the slot machine game, the mobile device may terminate the slot machine game and then return to the idle screen.

## Description

### BACKGROUND OF THE INVENTION

### 1. Field of the Invention:

The present invention relates to mobile device technology. More particularly, the present invention relates to a mobile device, a method and a system for providing a differentiated game service on an idle screen to a user.

### 2. Description of the Related Art:

Due to an increasing growth of mobile related technologies, popularity and use of a great variety of mobile devices is increasing. Mobile devices are now offering various end-user functions, in addition to traditional voice calls, such as text or multimedia messaging services, a digital camera, a music player, a digital broadcast service, a mobile internet access, a game service, and other similar services.

Conventional mobile devices offer an idle screen, also referred to as a main screen, a home screen, or other similar names indicating a primary or initial screen of the mobile device's user interface. The idle screen may have several distinctive icons that are arranged to represent available menu items or functions. In conventional usage, the mobile device may arrange the icons in various schemes such as a page type, a scroll type, a grid type, a ring type, or other similar icon arrangement schemes. When one of the icons is selected on the idle screen, the mobile device can execute a particular function assigned to the selected icon.

However, conventional mobile devices may fail to utilize the idle screen for other purposes additional to arranging icons. Thus, conventional idle screens may not provide users of the mobile device with additional benefits, such as entertainment, or other similar purposes.

### SUMMARY OF THE INVENTION

Aspects of the present invention are to address the above-mentioned problems and/or disadvantages and to offer at least the advantages described below. Accordingly, an aspect of the present invention is to provide a user entertainment and also to attract the user's attention through the idle screen.

Another aspect of the present invention is to allow a user to directly execute a game on the idle screen without requiring the selection of a game icon.

Another aspect of the present invention is to allow a user to easily access a web server during a game and then to purchase contents from the web server with saved game points.

According to an aspect of the present invention, a method for providing a game in a mobile device is provided, the method includes displaying an idle screen containing a plurality of icons, when a first touch and move gesture in a first direction is detected on the idle screen, executing a slot machine game using the icons, and outputting execution results of the slot machine game.

According to another aspect of the present invention, a mobile device is provided. The mobile device includes a display unit for displaying an idle screen containing a plurality of icons, a touch detection unit for detecting a touch based gesture, and a control unit for executing a slot machine game using the icons when the touch detection unit detects a first touch and move gesture in a first direction on the idle screen, and for controlling a display of an execution screen of the slot machine game on the display unit.

According to another aspect of the present invention, a system for providing a game is provided. The system includes a web server for offering at least one of contents and applications and for offering advertising icons registered by sponsors, and a mobile device for receiving at least one of the advertising icons from the web server, for storing the received advertising icon, for executing a slot machine game by using icons arranged in an idle screen and further using the stored advertising icons when a first touch and move gesture in a first direction is detected on the idle screen, and for offering a function to purchase the contents or the applications with game points from the web server, the game points being accumulated saved through the slot machine game.

Aspects of the present invention may provide a differentiated mobile device, a method and a system by utilizing the idle screen in offering a game using icons as well as displaying the icons linked to particular functions. Therefore, aspects of the present invention may provide a user entertainment and also attract user's interest through the idle screen.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a schematic view illustrating a configuration of a game providing system in accordance with an exemplary embodiment of the present invention.

FIG. 2 is a block diagram illustrating a configuration of a mobile device in accordance with an exemplary embodiment of the present invention.

FIGs. 3A and 3B are views illustrating a configuration of a slot map for a slot game in accordance with an exemplary embodiment of the present invention.

FIG. 4 is a flow diagram illustrating a method for providing a game on an idle screen in accordance with an exemplary embodiment of the present invention.

FIGs. 5 to 11 are views illustrating a process of executing a game in accordance with an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Furthermore, well known or widely used techniques, elements, structures, and processes may not be described or illustrated in detail in order to avoid obscuring aspects of the present invention. Although the drawings represent exemplary embodiments of the invention, the drawings are not necessarily to scale and certain features may be exaggerated or omitted in order to better illustrate and explain the exemplary embodiments of the present invention.

A mobile device according to an exemplary embodiment of the invention is an electronic device capable of offering an idle screen having a plurality of icons displayed thereon. Such electronic devices include a mobile communication terminal, a Personal Digital Assistant (PDA), a smart phone, a Portable Multimedia Player (PMP), a navigation terminal, or other similar electronic devices. An exemplary embodiment of the present invention described hereinafter is a mobile communication terminal as a good representative of the mobile device. However, the present invention is not limited thereto, and other electronic devices embody aspects of the present invention.

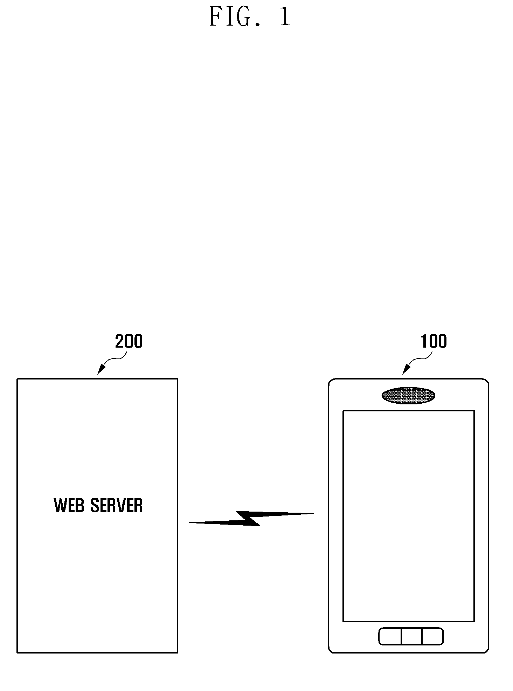

FIG. 1 is a schematic view illustrating a configuration of a game providing system in accordance with an exemplary embodiment of the present invention.

Referring to FIG. 1, the game providing system may be composed of a mobile device 100 and a web server 200.

The web server 200 is an internet connected server that provides various contents. The web server 200 may be managed by a device manufacturer or a mobile communication service provider. For instance, the web server 200 may be what is called an 'app store' or an 'application store' which allows a user to browse and download applications. The web server 200 is connected to the mobile device 100 so that a user can purchase contents or applications, using saved game points, or through the mobile device 100. Purchasable contents or applications may be a music file, a video file, a scheduler application, an internet access application, and the like. Additionally, the web server 200 may send advertising icons registered by sponsors to the mobile device 100. In this case, a well known push technique may be used for transmitting the advertising icons. Alternatively, a pull technique, in which the transmission of the advertising icons is initiated at a user's request, may be used.

The mobile device 100 provides a game function, so as to directly offer a particular game that employs a number of icons arranged on an idle screen. This idle screen may be a menu screen or page in which menu items of the mobile device 100 are represented by the form of icons. The game may be a slot machine game or a variety of other games. A user of the mobile device 100 may save game points accumulated through the slot machine game and then purchase contents or applications using the saved game points from the web server 200. Also, for saving points, the mobile device 100 may receive and store advertising icons transmitted by the web server 200. In this case, the mobile device 100 may provide the slot machine game using the advertising icons as well as the menu icons. The present case allows sponsors to obtain advertising effects, allows operators of the web server 200 to obtain advertising revenues, and allows users of the mobile device 100 to save points by using the slot machine game containing the advertising icons and to purchase contents or applications using the saved game points.

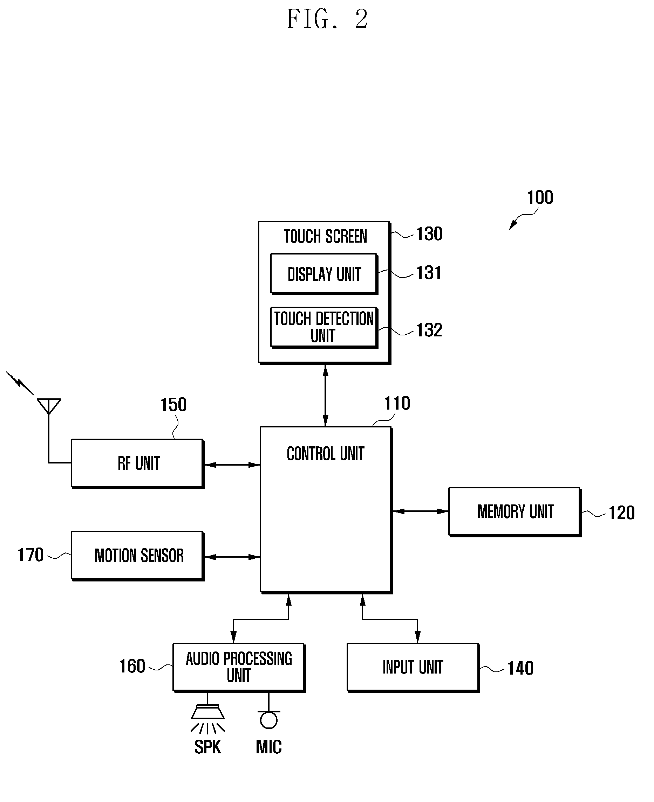

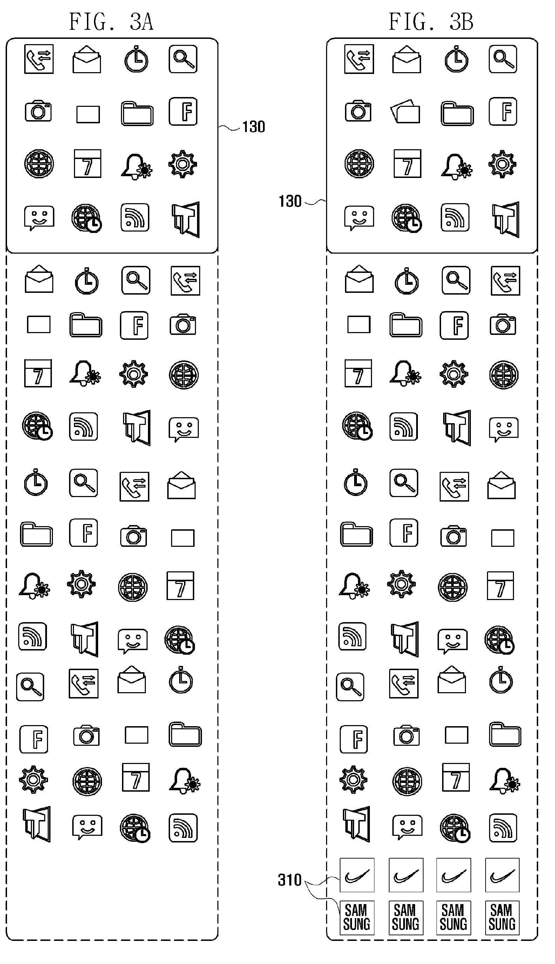

FIG. 2 is a block diagram illustrating a configuration of a mobile device in accordance with an exemplary embodiment of the present invention, and FIGs. 3A and 3B are views illustrating a configuration of a slot map for a slot game in accordance with an exemplary embodiment of the present invention.

Referring to FIGs. 2 and 3A and 3B, the mobile device 100 may include a control unit 110, a memory unit 120, a touch screen 130, an input unit 140, a Radio Frequency (RF) unit 150, an audio processing unit 160, and a motion sensor 170. The touch screen 130 may include a display unit 131 and a touch detection unit 132. The above-specified elements of the mobile device 100 will be described in detail below.

The RF unit 150 establishes communication channels for a voice call and for data communication under the control of the control unit 110. Namely, the RF unit 150 establishes a voice call channel, a data communication channel and a video call channel of a mobile communication system through a base station of the mobile communication system. The RF unit 150 may include an RF transmitter (not shown) that up-converts the frequency of a signal to be transmitted and then amplifies the signal, an RF receiver (not shown) that amplifies a received signal with low-noise and then down-converts the frequency of the signal. More particularly, according to an exemplary embodiment of the present invention, the RF unit 150 may establish a communication channel with the web server 200 in order to receive advertising icons 310 from the web server 200. The RF unit 150 may form a communication channel with the web server 200 through one of a mobile communication network protocol, such as Code Division Multiple Access (CDMA), Wideband CDMA (WCDMA), Global System for Mobile communication (GSM), or other similar communication network protocols, a short range wireless communication network protocol, such as WiFi, wireless Local Area Network (LAN), or other similar wireless communication network protocols, and a mobile internet communication network protocol, such as Wibro, WiMax, or other similar mobile internet communication protocols. Also, the RF unit 150 may receive contents or applications a user purchases using saved game points from the web server 200.

The input unit 140 may include a plurality of input keys and function keys configured to receive numerical, symbolic or alphabetical information and to set or control various functions of the mobile device 100. For instance, the input unit 140 may include a call key for a voice call request, a video call key for a video call request, a stop key for a call stop request, volume keys for regulating a sound volume, navigation keys, or other similar input and function keys. Additionally, the input unit 140 may include a specific function key for executing a slot machine game using icons arranged on the idle screen. The input unit 140 may be formed of one or combination of a touch pad, the touch screen 130, a button-type keypad with a normal key layout, a button-type keypad with a QWERTY key layout and other similar input devices or schemes.

The touch screen 130 is an input/output device capable of performing input and output functions. As mentioned above, the touch screen 130 may include the display unit 131 and the touch detection unit 132. The display unit 131 presents information, including various menus of the mobile device 100, inputted by a user or offered to the user. Namely, the display unit 131 may visually present a variety of screen views in connection with the use of the mobile device 100, such as the idle screen, a menu screen, a message writing screen, a call screen and other similar screens. More particularly, the display unit 131, according to an exemplary embodiment of the present invention, may present the idle screen having a number of menu or widget icons corresponding to respective particular functions arranged thereon. When a predefined touch-based gesture occurs on the idle screen, the display unit 131 may display a screen view of a slot machine game using the menu or widget icons. If the web server 200 is connected to the mobile device 100, the display unit 131 may display the screen view of the slot machine game including advertising icons 310 received from the web server 200 as well as the menu or widget icons. Further related descriptions will be given later with reference to examples of the screen view of the slot machine game. The display unit 131 may be formed of Liquid Crystal Display (LCD), Organic Light Emitting Diodes (OLED), or any other equivalent.

The touch detection unit 132 may be overlaid, formed or disposed on the display unit 131 in order to detect touch-based gestures on a surface of the display unit 131. Touch-based gestures are made with a user's finger or by means of a touch input device such as a stylus pen. When a user's finger or a touch input device touches the surface of the touch screen 130 at a touch point, the touch detection unit 132 detects coordinates of the touch point and then sends the detected coordinates to the control unit 110. At this time, the touch detection unit 132 may send signals corresponding to a double touch gesture, a touch and move gesture (such as a drag or flick gesture), a multi touch gesture, a touch release gesture, or other similar gestures, to the control unit 110. The touch detection unit 132 may be typically formed of a resistive overlay type for detecting a touch press or a capacitive overlay type for detecting variations in capacitance caused by the touch. However, the present invention is not limited thereto, and the touch detection unit 132 may be an infrared type touch detection device or any other suitable touch detection device.

The audio processing unit 160 includes a speaker (SPK) for outputting audio data received from the control unit 110 and a microphone (MIC) for inputting a user's voice or any other type of audio signal while a particular function, such as a call function, is carried out. The audio processing unit 160 may output audio signals caused by a shift of screen views. More particularly, the audio processing unit 160, according to an exemplary embodiment of the present invention, may output specific audio signals corresponding to the execution of the slot machine game. For instance, the audio processing unit 160 may output a given sound corresponding to a changing of icons (i.e., a scrolling of a slot map to be discussed below), a given sound corresponding to the game results, or other similar operation executions.

The motion sensor 170 may detect motion and orientation of the mobile device 100. The motion sensor 170 may be used to control a screen view mode. More specifically, the display unit 131 may display a screen view in a widthwise mode (i.e., a landscape mode) or in a lengthwise mode (i.e., a portrait mode), depending on the orientation of the mobile device 100 detected by the motion sensor 170. More particularly, the motion sensor 170 may detect a shaking motion of the mobile device 100 while displaying the idle screen or while the slot machine game is being executed. Then, the motion sensor 170 sends a corresponding signal to the control unit 110. Upon receiving the signal corresponding to the shaking motion, the control unit 110 may consider the signal to be a command to start or restart the slot machine game. The motion sensor 170 may be formed of a gravity sensor, a tilt sensor, an acceleration sensor, or other similar and suitable motion sensors or motion detecting devices. However, the present invention is not limited thereto, and if the mobile device 100 does not support the execution of the slot machine game based on a shake motion, the motion sensor 170 may be omitted.

The memory unit 120 may store programs and data required for operations of the mobile device 100, including an Operating System (OS) for the mobile device 100 and applications for executing various optional functions of the mobile device 100, such as a sound reproduction, an image or video playback, and other similar functions. More particularly, the memory unit 120, according to an exemplary embodiment of the present invention, may store a specific application for providing the slot machine game on the idle screen. This application may be executed in response to a touch and move gesture executed by a user on the idle screen displaying a number of icons arranged thereon. Also, the memory unit 120 may store at least one advertising icon 310 received from the web server 200. This advertising icon 310 may be added to a slot map for the slot machine game.

The control unit 110 controls the operation of the mobile device 100, controls signal flows between internal blocks of the mobile device 100, and performs a data processing function. When the display unit 131 is turned on or when a signal for displaying the idle screen is inputted in any other screen, the control unit 110 may control the output of the display unit 131 to display the idle screen. If the mobile device 100 offers two or more idle screens, the control unit 110 may control a shift from a currently displayed idle screen to another idle screen in response to a touch and widthwise move gesture or other similar gestures. Also, when a touch gesture is detected on a selected one of icons arranged in the idle screen, the control unit 110 may perform a particular function corresponding to the touched icon.

More particularly, the control unit 110, according to an exemplary embodiment of the present invention, may execute the slot machine game using a number of icons when a predefined touch and move gesture (e.g., a flick gesture) is made on the idle screen. Menu icons or widget icons used for executing specific menu items or widgets may be arranged in the idle screen. If the web server 200 is connected to the mobile device 100, the advertising icons 310 received from the web server 200 may be further arranged in the idle screen. In this case, operators of the web server 200 may obtain advertising revenue, and sponsors may effectively advertise their products by registering the advertising icons 310 in the web server 200. Furthermore, users of the mobile device 100 may obtain points by downloading the advertising icons 310 or playing the slot machine game and also may purchase contents or applications with such points from the web server 200.

When a touch and lengthwise move gesture, or in other words a gesture in which a user drags a fingertip, stylus or other suitable object across a length of the display unit 131, occurs on the idle screen containing a number of icons, the control unit 110 may create a slot map for the slot machine game. As shown in FIG. 3A, the icons are arranged in a rectangular array with four rows and four columns on the idle screen. Additionally, all twelve of the sixteen icons are disposed in extensions of each respective column to create a slot map with sixteen rows and four columns. Preferably, the icons disposed in each column have a random sequence rather than a regular sequence. Alternatively, as shown FIG. 3B, the control unit 110 may add at least one advertising icon 310 to the slot map. Although the above discussion of the present exemplary embodiment is based on the idle screen having an icon arrangement of four rows and four columns, the present invention is limited thereto and any suitable number of rows and columns may be used. Additionally, the number and arrangement of the icons in the idle screen may be varied according to designer's or user's choice.

After the slot map is created, the control unit 110 may scroll the slot map in a direction of movement of the touch and lengthwise move gesture for a predefined amount of time. When the predefined amount of time elapses, the control unit 110 may stop a scrolling of the slot map. Before scrolling the slot map, the control unit 110 may calculate a speed of a touch and moving gesture and then adjust scrolling speed and time of the slot map according to the calculated speed. Additionally, the control unit 110 may stop a scrolling of the slot map when another touch is detected during the scrolling of the slot map.

After the scrolling is stopped, the control unit 110 may determine whether there is an arrangement of the icons that satisfies a predefined rule. For instance, the control unit 110 may determine whether the same icons are arranged in horizontal, vertical and diagonal lines. It there is no icon arrangement satisfying the predefined rule, the control unit 110 may subtract a bet point amount from a current game point total. If there is a certain arrangement of icons satisfying the predefined rule, the control unit 110 may display an obtained point score in the display unit 131. Here, the obtained point score is determined according to the bet point amount as well as the icon arrangement satisfying the rule. Then a user may add the obtained point score to the current game point score or play a sub-game in order to obtain more point. For instance, when the user selects the sub-game, the control unit 110 may execute the rock-paper-scissors game or any other suitable game. If the user wins the sub-game, the control unit 110 may increase the obtained point score at a specific rate. If the user loses the sub-game, the control unit 110 may decrease the obtained point score and then return to the slot machine game.

If there is no input in the slot machine game for a given amount of time or if a touch and widthwise move gesture is inputted, the control unit 110 may return to the idle screen. Also, if a touch gesture is inputted on a specific icon in the slot machine game, the control unit 110 may perform a particular function corresponding to the touched icon. In a case of having the motion sensor 170, the control unit 110 may execute the slot machine game or resume the stopped game when a shake motion is detected.

According to the exemplary embodiment discussed above, the touch and lengthwise move gesture causes the execution of the slot machine game, and the touch and widthwise move gesture causes the shift of the idle screens. However, the present invention is not limited thereto, and the touch and lengthwise move gesture may cause the shift of the idle screens, and the touch and widthwise move gesture may cause the execution of the slot machine game, or other suitable gestures may be used to shift the idle screens or execute the slot machine game.

Although not illustrated in FIG. 2, according to exemplary embodiments of the present invention, the mobile device 100 may essentially or selectively include any other elements such as a camera module, a short range communication module such as a Bluetooth module, a Global Positioning System (GPS) module, a broadcast receiving module, a digital sound play module such as a Moving Picture Experts Group (MPEG)-1 or MPEG-2 Audio Layer 3 (MP3) module, an internet access module, or other similar modules, devices or elements suitable for the mobile device 100. According to the current trend towards digital convergence, such elements may be varied, modified and improved in various ways, and any other elements equivalent to the above elements may be additionally or alternatively equipped in the mobile device 100. Meanwhile, as will be understood by those skilled in the art, some of the above-mentioned elements in the mobile device may be omitted or replaced with another.

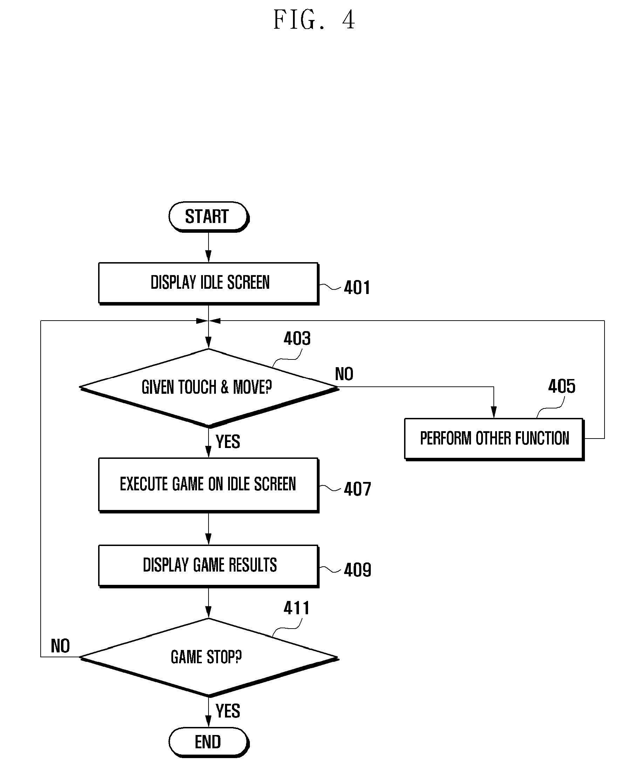

FIG. 4 is a flow diagram illustrating a method for providing a game on an idle screen in accordance with an exemplary embodiment of the present invention.

Referring to FIGs. 1 to 4, the control unit 110 enables the display unit 131 to display the idle screen containing a plurality of icons in step 401. For instance, the idle screen may display menu icons used for executing menu items or may display widget icons used for executing widgets. Two or more idle screens may be used. Additionally, corresponding to a touch and widthwise move gesture, the two or more idle screens may be sequentially shifted between. Furthermore, icons arranged in the idle screen may be changed by a user.

Next, in step 403, the control unit 110 may determine whether a touch and lengthwise move gesture occurs. This gesture may be a flick gesture such that a touch point executed by a user with a finger or a stylus is moved across the touch screen 130 at a speed greater than a predetermined value. If there is no touch and lengthwise move gesture, the control unit 110 may perform any other particular function in response to a corresponding input in step 405. For instance, when a touch gesture occurs on a specific icon, the control unit 110 may perform a particular function corresponding to the touched icon. Alternatively, when the touch and widthwise move gesture is executed on the mobile device 100 having two or more idle screens, then the control unit 110 may shift from displaying a current idle screen to displaying another idle screen. On the other hand, in step 407, if a touch and lengthwise move gesture is executed, then the control unit 110 may execute the slot machine game that uses icons contained in the idle screen. After step 407, the control unit 110 displays game results on the display unit 131 in step 409.

Next, in step 411, the control unit 110 may determine whether the slot machine game is stopped. When there is no input for a given amount of time or when a touch and widthwise move gesture occurs, the control unit 110 may stop the slot machine game and then display the idle screen. If the slot machine game is not determined to be stopped, the control unit 110 may return to step 403 in order to determine whether a touch and lengthwise move gesture occurs.

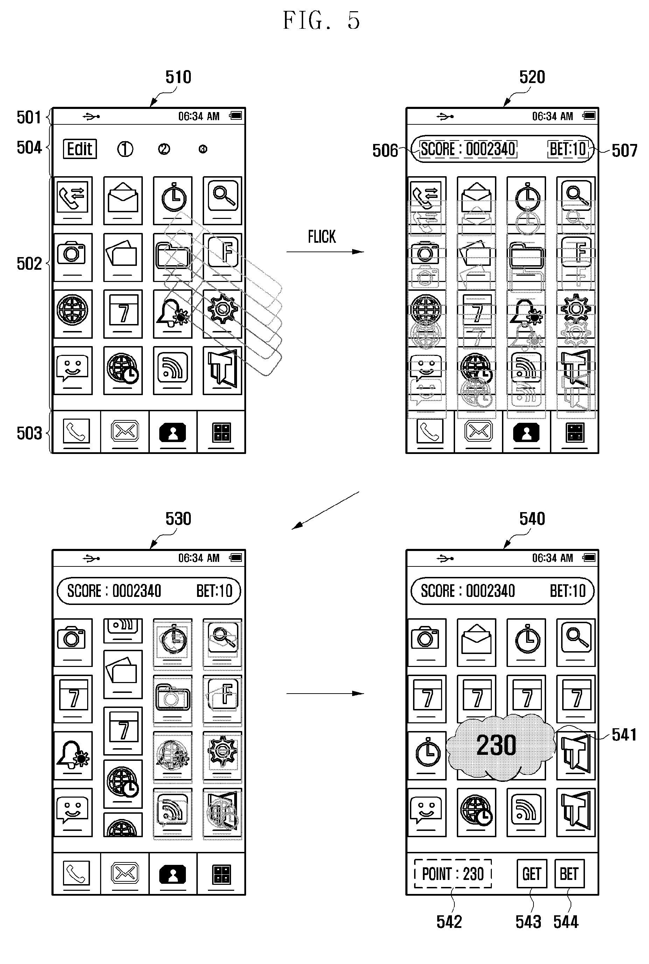

FIGs. 5 to 11 are views illustrating a process of executing a game in accordance with an exemplary embodiment of the present invention. The following discussion will be based on a touch-based input. However, the present invention is not limited thereto, and a touch-based input to be discussed hereinafter may be replaced with any other suitable input, such as an input through a keypad.

Referring to FIGs. 5 to 11, when the display unit 131 is turned on or when a signal for returning to the idle screen is inputted in any displayed screen. For example, if a cancel key or a stop key terminating an application or function is inputted, the mobile device 100 may display the idle screen as shown in a screen shot 510. The idle screen may be composed of an indicator region 501 for indicating information about battery status, etc., an icon display region 502 for displaying and arranging a number of icons corresponding to specific functions, a menu region 503, and an information display region 504.

If a touch and lengthwise move gesture (e.g., a flick gesture) occurs on the idle screen as shown in the screen shot 510, then the display unit 131 may display a scrolling screen having all of the icons arranged in the icon display region 502 move in a lengthwise direction as shown in a screen shot 520. At this time, the control unit 110 may calculate a speed of the touch and move gesture and then adjust a speed of the scrolling screen according to the speed of the touch and move gesture. The control unit 110 may stop the movement of icons when any touch gesture is detected during the scrolling movement of the icons. While the slot machine game is executed, the information display region 504 may offer game point information 506 indicating a saved point score, and bet information 507 indicating a bet point amount per round, as shown in the screen shot 520.

After a given time elapses, the display unit 131 may stop the scrolling movement of the icons sequentially in a column wise manner from the leftmost column, as shown in a screen shot 530 under the control of the control unit 110. However, the present invention is not limited thereto, and alternatively, the movement of icons may be stopped sequentially from the rightmost column, stopped simultaneously or may be stopped in any other suitable manner. After all icons are stopped moving, the control unit 110 may control the display unit 131 to display results of the slot machine game as shown in a screen shot 540. At this time, the control unit 110 may determine whether an arrangement of the icons satisfies a predefined rule. If there is no icon arrangement satisfying the predefined rule, the control unit 110 may subtract a bet point from a current game point. However, if all icons arranged in any row are identical, as shown in the screen shot 540, a user may obtain a predetermined amount of points. Here, the control unit 110 may offer an image 541 for displaying the amount of obtained points on the display unit 131. Additionally, the control unit 110 may display obtained point information 542, a menu item 543 for saving the obtained point, and another menu item 544 for executing a sub-game in the menu region 503.

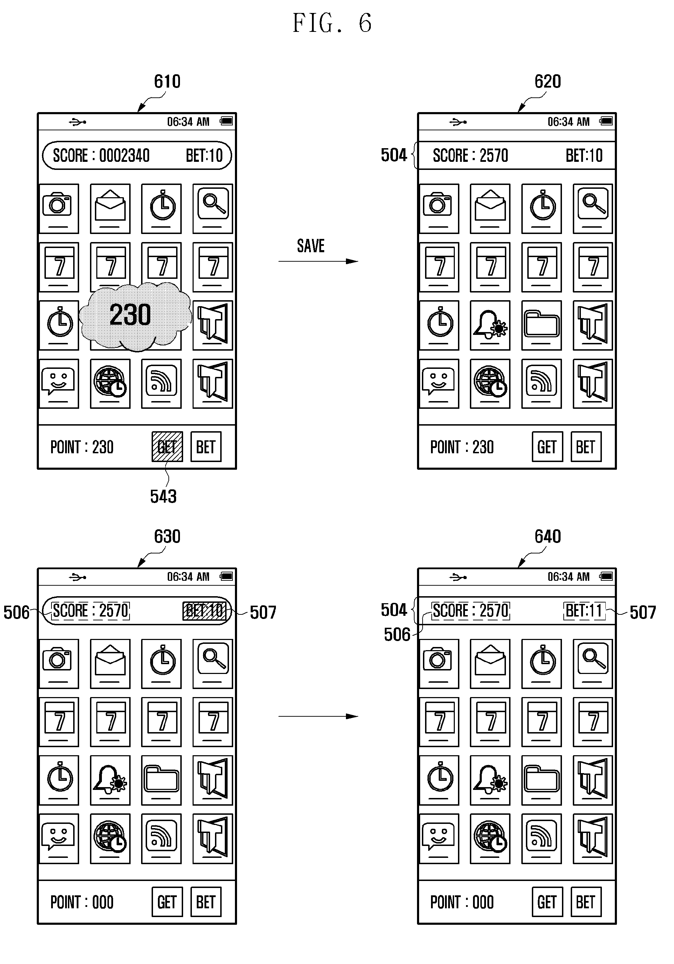

If, at the screen shot 540, a user touches the menu item 543 for saving the obtained points, as shown in a screen shot 610 of FIG. 6, then the control unit 110 may change the game point information 506 by adding the obtained points to the current game points. For example, '240' obtained points are added to the current game points '2340' to increase the current game points to '2570,' as shown in a screen shot 620. Meanwhile, a user may change an amount of points bet per round by touching the bet information 507 in the information display region 504, as shown in a screen shot 630. When the bet information 507 is selected, the control unit 110 may gradually increase or decrease the bet point amount. For example, as shown in a screen shot 640, the bet point amount may be changed from '10' to '11'. If the upper limit of the bet point amount is set, touching the bet information 507 at the upper limit may initialize the bet point to '1'. Also, for a distinction between the increase and the decrease of the bet point amount, an upward move of the touch on the bet information 507 may cause increases of the bet point until the touch is released, and a downward move of the touch on the bet information 507 may cause decreases of the bet point amount until the touch is released. However, the present invention is not limited thereto, and the bet information 507 and the bet point amount may be adjusted by any suitable input gesture or method.

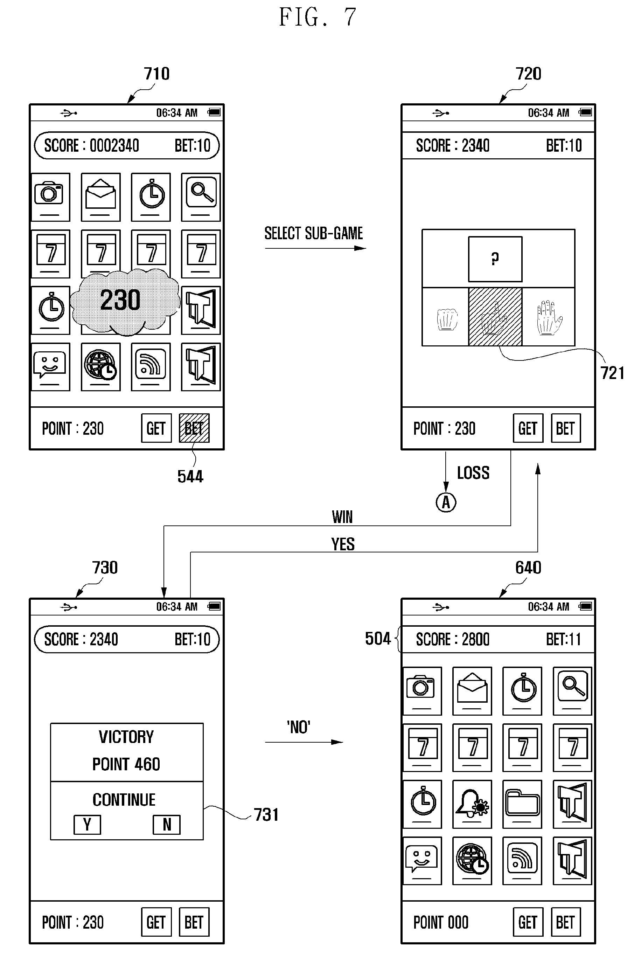

If, at the screen shot 540, a user touches the menu item 544 for executing the sub-game, which is shown in a screen shot 710 of FIG. 7, the control unit 110 may offer a sub-game window 721 on the display unit 131 as shown in a screen shot 720. The sub-game window 721 may be displayed in the icon display region 502, and the sub-game may be the rock-paper-scissors game. As shown in the screen shot 720, an upper part of the sub-game window 721 represents a question mark that hides one of a rock, a paper and scissors randomly selected by the mobile device 100. The lower part of the sub-game window 721 represents three images of a rock, a paper and scissors, from which the user selects one of them to be compared to the rock, the paper or the scissors hidden by the question mark. If a user wins, the display unit 131 displays a pop-up window 731 as shown in a screen shot 730 under the control of the control unit 110. This pop-up window 731 may contain a victory message, an obtained point amount, and an inquiry about continuing. Here, the obtained point amount is increased at a predetermined rate. If a user selects a 'yes' at the screen shot 730, the display unit 131 may return to the screen shot 720 under the control of the control unit 110. If a user selects a 'no' at the screen shot 730, the display unit 131 may return to the execution screen of the slot machine game as shown in a screen shot 740. In this case, a point amount of '460' that is obtained through the slot machine game and the sub-game is added to the current game point total '2340.' Thus, the game point total in the information display region 504 is changed to an amount of '2800'.

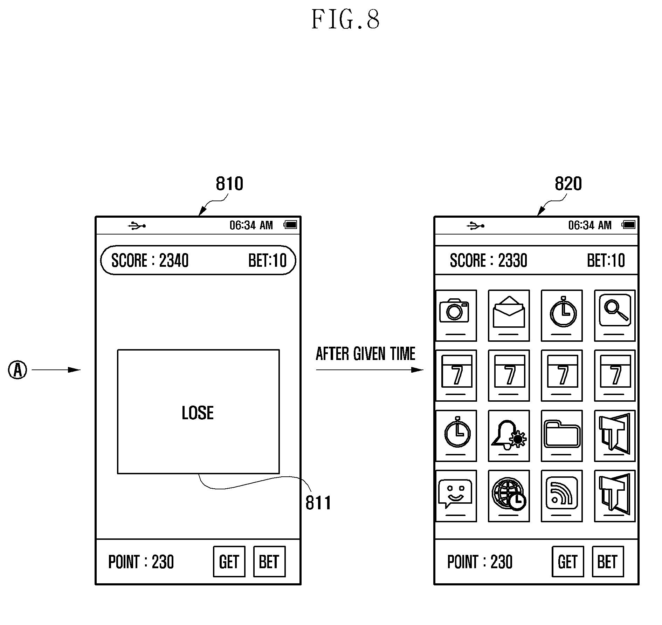

If the user loses at the screen shot 720, the display unit 131 displays a pop-up window 811 containing a defeat message as shown in a screen shot 810 of FIG. 8. Then after a given amount of time elapses, the display unit 131, under the control of the control unit 110, may return to the execution screen of the slot machine game as shown in a screen shot 820.

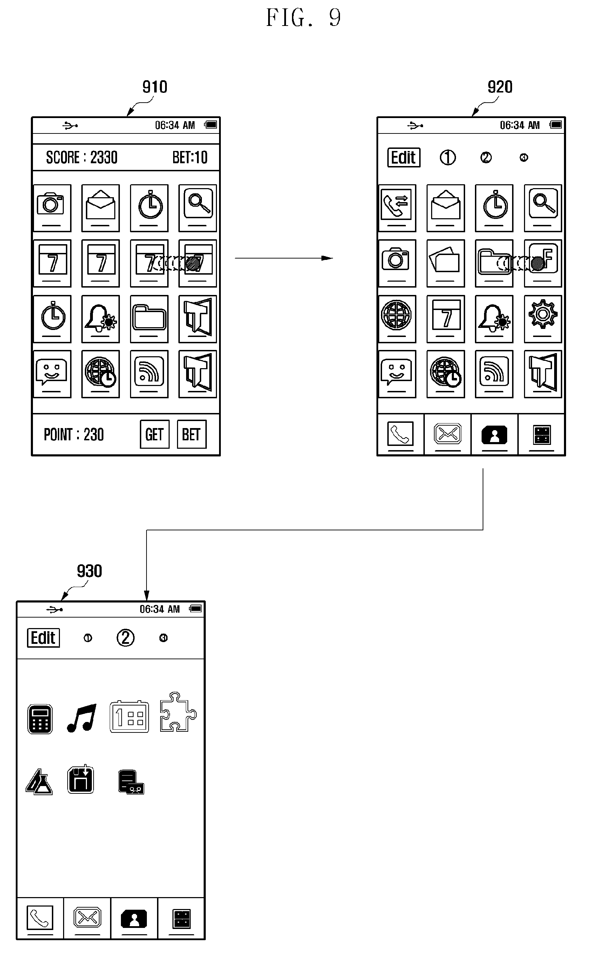

Meanwhile, if the touch and widthwise move gesture occurs on the execution screen of the slot machine game, as shown in a screen shot 910 of FIG. 9, then the control unit 110 may terminate the slot machine game and then return to the idle screen as shown in a screen shot 920. Additionally, if the touch and widthwise move gesture occurs on the idle screen as shown in the screen shot 920, the control unit 110 may shift the current idle screen to another idle screen disposed in a direction of the gesture direction, as shown in a screen shot 930.

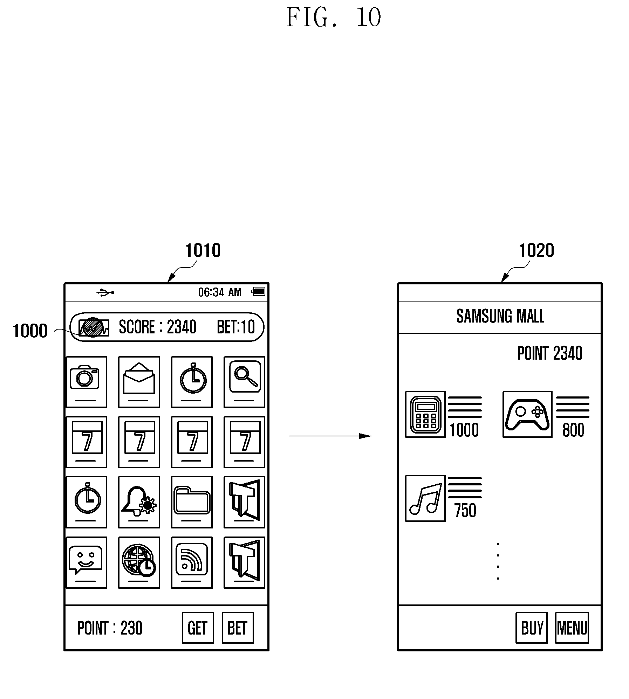

If the slot machine game is able to access the web server 200, a user who wishes to access the web server 200 may touch a logo 1000 of the web server 200 displayed in the execution screen of the slot machine game, as shown in a screen shot 1010 of FIG. 10. The mobile device 100 is then connected to the web server 200 through the RF unit 150, and the display unit 131 may display a webpage of the web server 200, as shown in a screen shot 1020. Then a user may purchase desired contents or applications with saved game points on the webpage of the web server 200.

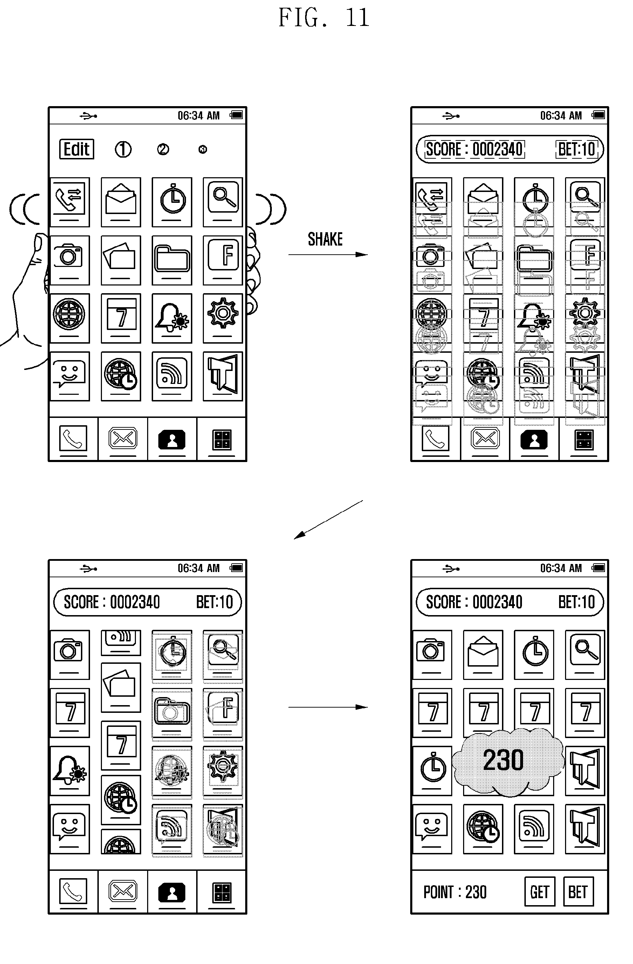

If the mobile device 100 has the motion sensor 170, the control unit 110 may execute the slot machine game when the motion sensor 170 detects a shaking motion of the mobile device 100 while at the idle screen, as shown in FIG. 11. Additionally, when such a shaking motion is detected while in the slot machine game, the control unit 100 may resume the slot machine game. Subsequent processes of the slot machine game are similar to those discussed above in reference to FIGs. 5 to 10.

In the exemplary embodiments of FIGs. 5 to 11, the touch and lengthwise move gesture causes the execution of the slot machine game, and the touch and widthwise move gesture causes the shift of the idle screens. However, the present invention is not limited thereto, and the touch and lengthwise move gesture may cause the shift of the idle screens, and the touch and widthwise move gesture may cause the execution of the slot machine game, or other suitable gesture combinations may be used as well. Also, the above discussion, with reference to FIGs. 5 to 11, is based on the slot machine game using only icons arranged in the idle screen. However, the present invention is not limited thereto, and the mobile device 100 may provide the slot machine game using the advertising icons, received from the web server 200, as well as the menu icons or other suitable icons. This allows sponsors to obtain advertising effects, allows operators of the web server 200 to obtain advertising revenues, and allows users of the mobile device 100 to save points by using the slot machine game containing the advertising icons and to purchase contents or applications with saved game points from the web server 200.

Aspects of the present invention are described above with reference to flowchart illustrations of user interfaces, methods, and computer program products according to exemplary embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

While this invention has been particularly shown and described with reference to an exemplary embodiment thereof, it will be understood by those skilled in the art that various changes in form and details may be made therein without departing from the spirit and scope of the invention as defined by the appended claims and their equivalents.

## Claims

1. A method for providing a game in a mobile device, the method comprising:
displaying (401) an idle screen containing a plurality of icons;
when a first touch and move gesture in a first direction is detected on the idle screen, executing (403, 407) a slot machine game using the icons; and
outputting (409) execution results of the slot machine game.

2. The method of claim 1, wherein the executing (407) of the slot machine game includes:
creating a slot map using the icons contained in the idle screen;
scrolling the slot map for a predetermined amount of time; and
when a touch gesture is detected during the scrolling of the slot map, stopping the scrolling of the slot map.

3. The method of claim 2, wherein the creating of the slot map includes:
receiving an advertising icon from a web server; and
creating the slot map using the received advertising icon and the icons contained in the idle screen.

4. The method of claim 2, wherein the outputting (409) of the execution results includes:
determining whether an arrangement of the icons after the scrolling satisfies a predefined rule;
if the arrangement of the icons after the scrolling fails to satisfy the predefined rule, subtracting a bet point from a current game point total; and
if the arrangement of the icons after the scrolling satisfies the predefined rule, adding an obtained point to the current game point total or executing a sub-game in which the obtained point is increased at a specific rate in case of win or is decreased in case of loss.

5. The method of claim 1, further comprising:
when a second touch and move gesture in a second direction is detected on an execution screen of the slot machine game, terminating the slot machine game and then returning to the idle screen; and
if there is no input for a predetermined amount of time on an execution screen of the slot machine game, terminating the slot machine game and then returning to the idle screen.

6. The method of claim 1, further comprising:
when a motion sensor detects a shaking motion of the mobile device at the idle screen, executing the slot machine game using the icons; and
if the motion sensor detects the shaking motion during the execution of the slot machine game, resuming the slot machine game.

7. The method of claim 2, wherein the executing of the slot machine game further includes:
calculating a speed of the first touch and move gesture; and
adjusting a scrolling speed and a time of the slot map according to the calculated speed.

8. The method of claim 1, further comprising:
when one of the icons is touched on the idle screen or on an execution screen of the slot machine game, performing a particular function corresponding to the touched icon.

9. A mobile device (100) comprising:
a display unit (131) for displaying an idle screen containing a plurality of icons;
a touch detection unit (132) for detecting a touch based gesture; and
a control unit (110) for executing a slot machine game using the icons when the touch detection unit (132) detects a first touch and move gesture in a first direction on the idle screen, and for controlling a display of an execution screen of the slot machine game on the display unit (131).

10. The mobile device of claim 9, further comprising:
a radio frequency unit (150) for receiving an advertising icon (310) from a web server (200); and
a memory unit (120) for storing the advertising icon (310),
wherein the control unit (110) executes the slot machine game by using the advertising icon (310) and the icons contained in the idle screen.

11. The mobile device of claim 9, further comprising:
a motion sensor (170) for detecting the motion of the mobile device (100),
wherein the control unit (110) executes the slot machine game when the motion sensor (170) detects a shaking motion of the mobile device (100) when displaying the idle screen.

12. The mobile device of claim 9, wherein the control unit (110) terminates the slot machine game and then returns to the idle screen when a second touch and move gesture in a second direction is detected on the execution screen of the slot machine game or if there is no input for a predetermined amount time on the execution screen of the slot machine game.

13. The mobile device of claim 9, wherein the control unit (110), when one of the icons is touched on the idle screen or on the execution screen of the slot machine game, performs a particular function linked to the touched icon.

14. A system for providing a game, the system comprising:
a web server (200) for offering at least one of contents and applications and for offering advertising icons (310) registered by sponsors; and
a mobile device (100) for receiving at least one of the advertising icons (310) from the web server (210), for storing the received advertising icons (310), for executing a slot machine game by using icons arranged in an idle screen and further using the stored advertising icon (310) when a first touch and move gesture in a first direction is detected on the idle screen, and for offering a function to purchase the contents or the applications with game points from the web server (200), the game points being accumulated and saved through the slot machine game.

15. The system of claim 14, wherein the advertising icons (310) are offered to the mobile device (100) through a push or a pull technique.
